# EUROPEAN PATENT SPECIFICATION

(11) **EP 4 572 225 B1**
(45) Date of publication and mention of the grant of the patent: **16.09.2026**
(21) Application number: 23217054.8
(22) Date of filing: 15.12.2023
(51) Int. Cl.: H04L 9/08

(54) **HARDWARE SECURITY SYSTEM AND METHODS FOR OPERATING IT**
HARDWARE-SICHERHEITSSYSTEM UND VERFAHREN ZU SEINEM BETRIEB
SYSTÈME DE SÉCURITÉ MATÉRIEL ET PROCÉDÉS POUR LE FAIRE FONCTIONNER

(43) Date of publication of application: 18.06.2025
(73) Proprietor: ID Quantique S.A., 1227 Genève (CH)
(72) Inventor: CHARBONNIER, Yvan, 1213 Onex (CH); RINN, Emmanuel, 74580 VIRY (FR)
(74) Representative: Kraus & Lederer PartGmbB

(56) References cited:
- WO-A1-2023/002148
- US-A1- 2018 109 377
- US-B1- 11 449 799

## Description

The present invention relates to a hardware security module, or a system of hardware security modules, and methods for their operation.

### State of the art

A hardware security module (HSM) is a physical computing device that safeguards and manages secrets, such as digital keys, performs encryption and decryption functions for digital signatures, strong authentication and other cryptographic functions. Hardware security modules traditionally come in the form of a plug-in card or an external device that attaches directly to a computer or network server.

Hardware security modules store the most important secrets of an organization. Access to those secrets is thus strictly limited, as anyone in possession of the secret would be able to access confidential material which has been protected by the secrets. It is therefore a basic limitation of security architectures based on hardware security modules that the secrets stored in the hardware security module are never allowed to leave it.

However, hardware security modules, as any other electronic equipment, need periodical replacing, due to failure, preventive maintenance, upgrading, etc. This implies that, at some point, the secrets stored in the hardware security module must be accessed by an operator, in order to copy it and transfer it into a new hardware security module.

In current implementations, the hardware security modules are generally backed up, or copied, by a so-called "physical ceremony". This mainly consists of a physical sharing of the secrets stored within the hardware security modules under video-surveillance.

This solution, however, is not ideal for various reasons. The video-surveillance can only be used to track a breach after this has been committed, thus identifying the breach too late. Moreover, the current solution requires the hardware security module to be designed such that secrets can be extracted from it, otherwise a copy, or backup, would never be possible. While various layers of checks can be put in place to allow only authorized personnel to execute the extraction, those checks can always be hacked given sufficient time and resources.

Further prior art solutions are disclosed in documents US 11 449 799 B1, US 2018/109377 A1 and WO 2023/002148 A1.

It is an object of the invention to provide a hardware security module which overcomes the disadvantages above.

### Summary of the invention

The object above is achieved by the invention, which is defined by the independent claims. The dependent claims define further advantageous aspects of the invention.

In general, the inventors have realized that secrets can be stored and/or transferred between two or more hardware security modules using a quantum key distribution network. In some embodiments, this allows the generation and storage of new secrets at multiple hardware security modules without the secrets never leaving any of the two or more hardware security modules. In those embodiments, this allows the two or more hardware security modules to be designed such that secrets can never be extracted from them, which strongly increases their security.

In addition, if one or more of the two or more hardware security modules is configured to allow extraction of the secrets, for instance for copying them into the remaining hardware security modules, the transfer can be operated through a quantum key distribution network instead of using a physical storage. This is particularly preferable as it avoids a copy of the secrets to be stored on a permanent storage outside of the hardware security modules, which reduces security. Moreover, the use of a quantum key distribution network for the transfer allows a safe and reliable transfer ever over long distances.

An embodiment can relate to a hardware security system comprising a first hardware security module, configured to store a secret, a second hardware security module, configured to store the secret, a quantum key distribution network comprising a first quantum key distribution node, a second quantum key distribution node and a quantum encrypted channel, wherein the first quantum key distribution node can be connected to the first hardware security module, wherein the second quantum key distribution node can be connected to the second hardware security module.

In some embodiments, the first hardware security module can comprise a first interface, configured to allow exchange of data other than the secret with a user of the first hardware security module.

In some embodiments, the first interface can be configured to allow the data other than the secret to be received and outputted by the first hardware security module.

In some embodiments, the first hardware security module can comprise a second interface, configured to allow exchange of the secret with the first quantum key distribution node.

In some embodiments, the second interface can be configured to allow the secret to be received but not outputted by the first hardware security module.

In some embodiments, the second interface can be configured to allow the first hardware security module to transmit a request, to the first quantum key distribution node, to generate the secret.

In some embodiments, the first quantum key distribution node can comprise a third interface, configured to allow exchange of the secret with the first hardware security module.

In some embodiments, the third interface can be configured to allow the secret to be outputted but not received by the first quantum key distribution node.

In some embodiments, the first hardware security module can be configured to instruct the quantum key distribution network to generate a new secret.

In some embodiments, the first hardware security module can be configured to transmit a message to the second hardware security module, indicating that the quantum key distribution network has been instructed to generate the new secret.

In some embodiments, the second hardware security module can be configured to store the new secret upon receiving the message.

In some embodiments, the quantum key distribution network can be configured to transmit the message.

In some embodiments, the hardware security system can further comprise a controller configured to instruct the quantum key distribution network to generate a new secret.

In some embodiments, the controller can be configured to instruct the quantum key distribution network to generate the new secret upon receiving a message indicating that the new secret can be needed at the first hardware security module.

In some embodiments, the controller can be configured to instruct the second hardware security module to store the new secret.

In some embodiments, the quantum key distribution network can be configured to transmit a message, to the second hardware security module, indicating the availability of a new secret, the second hardware security module can be configured to store the new secret upon receiving the message.

In some embodiments, the message can be further configured to comprise information concerning the intended use of the new secret.

In some embodiments, the quantum key distribution network can be configured to transmit the message.

In some embodiments, the first quantum key distribution node and the first hardware security module can be implemented in a single physical unity, and/or the second quantum key distribution node and the second hardware security module can be implemented in a single physical unity.

In some embodiments, the first quantum key distribution node and the first hardware security module can be connected via a network, and/or the second quantum key distribution node and the second hardware security module can be connected via a network.

In some embodiments, the quantum key distribution network can be configured to receive one or more secrets from the first hardware security module and transmit them to the second hardware security module.

A further embodiment can relate to a method for operating a hardware security system according to any embodiment, the method comprising the steps of generating one or more new secrets through the quantum key distribution network, sending the one or more new secrets from the first quantum key distribution node to the first hardware security module and from the second quantum key distribution node to the second hardware security module, storing the one or more new secrets at the first hardware security module and at the second hardware security module.

A further embodiment can relate to a method for operating a hardware security system according to any embodiment, the method comprising the steps of sending one or more secrets from the first hardware security module to the first quantum key distribution node, sending the one or more secrets from the first quantum key distribution node to the second quantum key distribution node, sending the one or more secrets from the second quantum key distribution node to the second hardware security module, storing the one or more new secrets at the second hardware security module.

A further embodiment can relate to a hardware security module, configured to be connected to a quantum key distribution node so at to implement the functionality of the first hardware security module, or of the second hardware security module of the hardware security system according to any embodiment.

### Brief description of the drawings

Figure 1 schematically illustrates a hardware security system 1000;
Figure 2 schematically illustrates a hardware security system 2000;
Figure 3 schematically illustrates a hardware security system 3000;
Figure 4 schematically illustrates a method 4000 for operating a hardware security system so as to generate and store one or more new secrets;
Figure 5 schematically illustrates a method 5000 for operating a hardware security system so as to transfer one or more secrets.

### Description of preferred embodiments

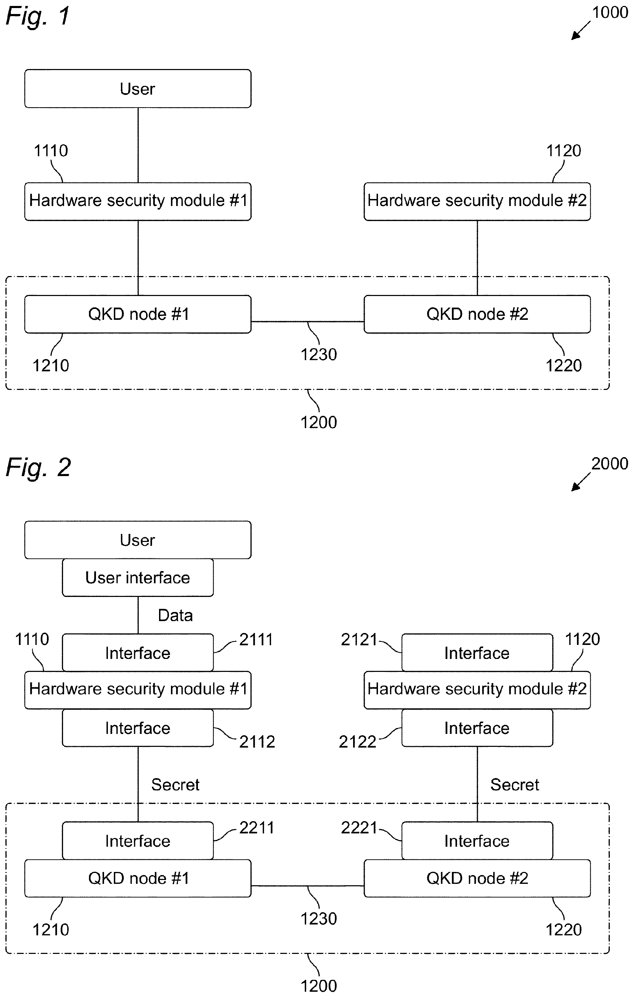

Figure 1 schematically illustrates a hardware security system 1000 comprising a first hardware security module 1110, configured to store a secret, and a second hardware security module 1120, configured to store the same secret.

The first hardware security module 1110 and/or the second hardware security module 1120 can generally be implemented by a physical computing device configured to store, and possibly manage, secrets. The secrets can be understood as being any type of information which need to be kept secret, for instance digital keys, or similar. In preferred embodiments, a hardware security module can also perform encryption and/or decryption functions based on the secrets. Preferably, the first hardware security module 1110 and the second hardware security module 1120 are implemented in the same manner, however the invention is not limited thereto.

The hardware security system 1000 further comprises a quantum key distribution network 1200 comprising a first quantum key distribution node 1210, a second quantum key distribution node 1220 and a quantum encrypted channel 1230.

The quantum key distribution network 1200 can, in preferred embodiments, be implemented by a network allowing a secure communication between nodes, and, in particular, implementing a cryptographic protocol involving components of quantum mechanics. The quantum key distribution network 1200 is generally configured so as to enable at least two nodes, such as nodes 1210 and 1220, to produce a shared random secret through exchanges on the quantum encrypted channel 1230 connecting them. In preferred embodiments, the quantum encrypted channel 1230 comprises, or is, an optical channel, such as, for instance, an optical fiber.

As can be seen in figure 1, the first quantum key distribution node 1210 is connected to the first hardware security module 1110, and the second quantum key distribution node 1220 is connected to the second hardware security module 1120. The connection between the quantum key distribution node and the respective hardware security module can be implemented in any known manner, for instance through a cable, a wireless connection, or a network. In referred embodiments, the connection will be involving as little elements as possible, so as to increase security. Preferably, the connection is a wired connection, directly connecting the quantum key distribution node and the respective hardware security module.

Thanks to this implementation, secrets can be generated at both ends of the quantum encrypted channel 1230, as part of a known process for a quantum key distribution. In particular, various manners are known to operate the quantum key distribution network 1200 such that a common secret is generated at the quantum key distribution nodes 1210, 1220, in a manner which does not make this secret available outside of the quantum key distribution network 1200.

The secret generated in this manner can then be transferred from the quantum key distribution node to the respective hardware security module, thus ensuring that a single secret, generated by the quantum key distribution network 1200, is stored in both hardware security modules 1110, 1120, without ever be available to the world outside of the hardware security modules 1110, 1120 and the quantum key distribution network 1200. This makes it possible to obtain two copies of the same secrets in a safe and reliable manner, so that one of the hardware security modules 1110, 1120 can be used as a backup, should the other hardware security modules 1110, 1120 need to be replaced or be out of order.

Additionally, the generation of the secret through the quantum key distribution network 1200 enables each new secret to be truly random, as the random nature of the key generated by the quantum key distribution network 1200 is physically ensured. This is in contrast to the current implementation of hardware security modules, which generally implement a non-true random number generation, which reduces security of the secrets generated and stored in the hardware security module.

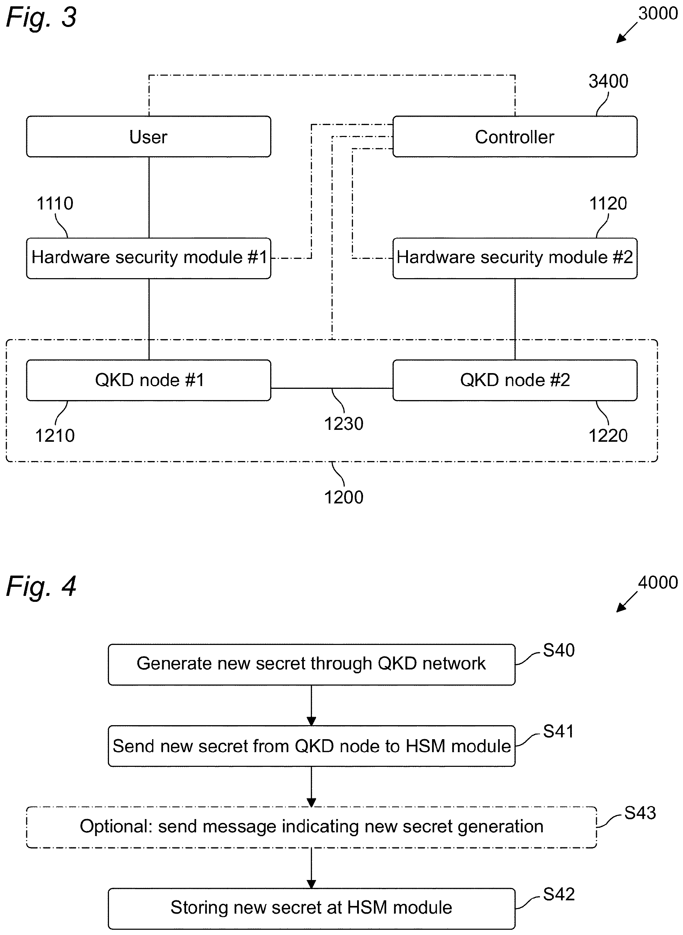

A corresponding method 4000, which can be implemented by any of the hardware security modules 1110, 1120 is schematically illustrated in figure 4. As can be seen, the method 4000 comprises a step S41 of generating one or more new secrets through the quantum key distribution network 1200. In a subsequent step S42 the one or more new secrets is sent from the first quantum key distribution node 1210 to the first hardware security module 1110 and from the second quantum key distribution node 1220 to the second hardware security module 1120. Finally, in a step S43 the one or more new secrets is stored at the first hardware security module 1110 and at the second hardware security module 1120.

The above thus describes how the hardware security system 1000 can be used to reliably and safely generate and store new identical secrets at two or more hardware security modules 1110, and how those secrets can possibly advantageously achieve a true random nature.

Alternatively, or in addition, the hardware security system 1000 can be used to reliably and safely transfer existing secrets from one of the hardware security modules 1110, 1120 to the other. That is, in general, the quantum key distribution network 1200 can be configured to receive one or more secrets from the first hardware security module 1110 and transmit them to the second hardware security module 1120. This is particularly advantageous in that if the first hardware security module 1110 needs maintenance, or in general is planned not accessible, the secrets can be still made available at the second hardware security module 1120 with need for a physical "transfer ceremony", in particular avoiding storing the secrets anywhere other than the hardware security modules 1110, 1120.

In particular, taking the example of a secret stored in the hardware security module 1110, the secret can be transferred to the quantum key distribution node 1210 through its connection to the hardware security module 1110. From the quantum key distribution node 1210, the secret can be safely transferred, by using the quantum key distribution network 1200, to the quantum key distribution node 1220, from which it can be transferred again to the hardware security module 1120.

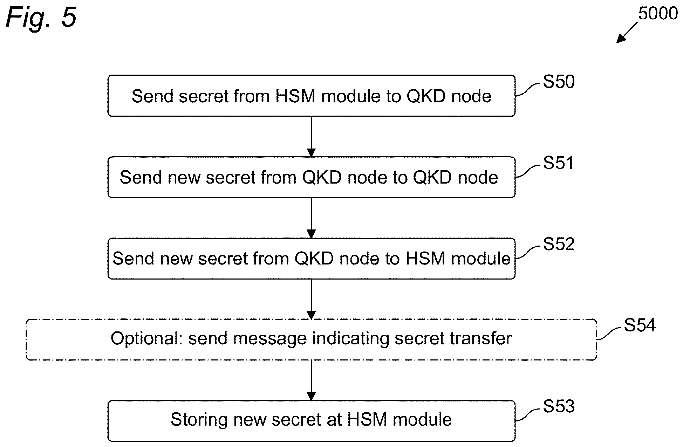

A corresponding method 5000, which can be implemented to transfer secrets in any direction between the hardware security modules 1110, 1120, is schematically illustrated in figure 5, in the direction from the first hardware security module 1110 to the second hardware security module 1120. The method comprises a step S50 of sending one or more secrets from the first hardware security module 1110 to the first quantum key distribution node 1210, a step S51 of sending the one or more secrets from the first quantum key distribution node 1210 to the second quantum key distribution node 1220, a step S52 of sending the one or more secrets from the second quantum key distribution node 1220 to the second hardware security module 1120, and a step S53 of storing the one or more secrets at the second hardware security module 1120.

For both type of operations of the system 1000 described above, it is noted that the use of the quantum key distribution network 1200 allows a safe and reliable transmission over long distances, such that the hardware security modules 1110, 1120 can be advantageously placed at different locations, if wished.

It is also noted that while the embodiment of figure 1 has been described and illustrated only with two hardware security modules 1110, 1120, and two quantum key distribution nodes 1210, 1220, the invention is not limited thereto. The hardware security modules and the corresponding quantum key distribution nodes can be any number equal to, or higher than, two. This applies to all other embodiments described as well.

Figure 2 schematically illustrates a hardware security system 2000. The hardware security system 2000 as illustrated comprises several elements in addition to those already described for hardware security system 1000. It will be clear that those additional elements do not all need to be implemented at the same time. In the following, various embodiments will be described in which only a subset of the elements illustrated in figure 2 are implemented. Any two or more of those embodiments can be combined but do not necessarily need to be.

In some embodiments, the first hardware security module 1110 can comprise a first interface 2111, configured to allow exchange of data other than the secret with a user of the first hardware security module 1110. Interface 2111, as any of the other interfaces which will be described in the following, can be implemented by software and/or hardware, in a manner which enables one or more of the operations which are described in connection to it.

Thanks to interface 2111, a user can exchange data, preferably other than the secrets, with the hardware security module 1110. A corresponding user interface can be provided for communication with the interface 2111, in case the interface 2111 is not provided with means for enabling a direct exchange with the user. Preferably, the first interface 2111 can be configured to allow the data, preferably other than the secret, to be received and outputted by the first hardware security module 1110.

The data exchanged by the user with the hardware security module 1110 can be of any type, but preferably not the secrets. The user can, in particular, access the functionalities of the hardware security module 1110, such as encryption and/or decryption of data, without gaining access to the secrets. This exchange can be bi-directional.

In some embodiments, the first hardware security module 1110 can comprise a second interface 2112, configured to allow exchange of the secret with the first quantum key distribution node 1210. Preferably, the second interface 2112 can be configured to allow the secret to be received but not outputted by the first hardware security module 1110.

In this manner, secrets can be transferred between the hardware security module 1110 and the first quantum key distribution node 1210. Preferably, this transfer is monodirectional, only from the first quantum key distribution node 1210 to the first hardware security module 1110, so that it can be ensured that quantum keys can never leave the first hardware security module 1110, thus increasing security by design.

It will be noted that in case the transfer is monodirectional, the operation mode described with reference to figure 5, namely the use of the quantum key distribution network 1200 for copying secrets from the first hardware security module 1110 to the second hardware security module 1120, would no longer be possible. In preferred embodiments, to avoid this limitation, it is thus possible to configure the second interface 2112 to be bi-directional or mono-directional. Thanks to this configuration, the second interface 2112 can be kept, for instance, by default in a mono-directional configuration, only enabling the bi-directional configuration when needed to transfer secrets. In further preferred embodiments, the second interface 2112 can be configured such that the change to the bi-directional configuration can only be implemented when having physical access to the second interface 2112, for instance by providing a button on the second interface 2112, or requesting the insertion of a key, in particular a physical or an electronic key, in the second interface 2112. In this manner, the switch to the by-directional configuration can be severely restricted, increasing safety of the secrets.

In preferred embodiments, the second interface 2112 can be configured to allow the first hardware security module 1110 to transmit a request, to the first quantum key distribution node 1210, to generate one or more secrets. Thanks to this configuration, the first hardware security module 1110 can request the generation of one or more new secrets to the quantum key distribution network 1200. This is particularly advantageous as the first hardware security module 1110 can have capabilities for determining when a new secret is needed, and can then proceed autonomously with the secret generation, in a safe manner without user's intervention.

In preferred embodiments, the first quantum key distribution node 1210 can comprise a third interface 2211, configured to allow exchange of one or more secrets with the first hardware security module 1110. This enables the exchange of the secret between the first quantum key distribution node 1210 and the first hardware security module 1110. In some preferred embodiments, the third interface 2211 can be configured to allow the one or more secrets to be outputted but not received by the first quantum key distribution node 1210. In this manner, a secret can never leave the first hardware security module 1110, increasing its security by design.

That is, the third interface 2211 can be operated in a bi-directional or in a mono-directional mode. The same considerations made above for the second interface 2112 apply to the third interface 2211. That is, if the third interface 2211 operates in a bi-directional mode, both methods 4000 and 5000 can be implemented. If the third interface 2211 operates in a mono-directional manner, allowing secrets to be transmitted only from the first quantum key distribution node 1210 to the first hardware security module 1110, then only method 4000 can be implemented. Similarly, if the third interface 2211 operates in a mono-directional manner, allowing secrets to be transmitted only from the first hardware security module 1110 to the first quantum key distribution node 1210, then only method 5000 can be implemented.

As for the second interface 2112, to avoid this limitation, the third interface 2211 can be configured to be normally set in a mono-directional mode, preferably the one allowing implementation of the method 4000, but with the possibility of enabling a bi-directional operation, so as to allow both methods 4000 and 5000. The considerations made on how to activate the bi-directional mode for the second interface 2112also apply to the third interface 2211.

While the interfaces 2111, 2112 and 2211 have been described above with reference to the first hardware security module 1110 and to the first quantum key distribution node 1210, it will be clear to those skilled in the art that one or more respective interfaces 2121, 2122 and 2221 can be implemented at the second hardware security module 1120 and/or at the second quantum key distribution node 1220. It will be clear to those skilled in the art that the direction of the mono-directional operation described in connection with an interface at a transmitting element can be inversed, for the respective interface at a receiving element.

In the description above, and in particular with respect to the various embodiments discussed with reference to figure 2, it has generally been described that one or more new secrets can be generated and/or transferred by the key distribution network 1200. It will be clear to those skilled in the art that the generation and/or transfer can be instructed by various elements, or by a user of the system. In the following, more details will be provided with respect to how the decision on the generation and/or transfer can be made.

Figure 3 schematically illustrates a hardware security system 3000. The hardware security system 3000 has as a basis the hardware security system 1000, for clarity of illustration. It will however be clear that the elements of the hardware security system 3000, in particular those additional to the hardware security system 1000, can also be implemented in conjunction with one or more elements of the hardware security system 2000.

The hardware security system 3000 as illustrated comprises several elements in addition to those already described for hardware security system 1000 and/or hardware security system 2000. It will be clear that those additional elements do not all need to be implemented at the same time. In the following, various embodiments will be described in which only a subset of the elements illustrated in figure 3 are implemented. Any two or more of those embodiments can be combined but do not necessarily need to be.

In particular, in one embodiment, the decision to generate a new secret can be taken by the first hardware security module 1110. In this embodiment, the first hardware security module 1110 can be configured to instruct the quantum key distribution network 1200 to generate the new secret. Thanks to this implementation, the first hardware security module 1110 can control the generation of the new secret. This is particularly advantageous in cases in which the first hardware security module 1110 acts as master hardware security module, and/or in which the second hardware security module 1120 acts as backup hardware security module.

Preferably, the first hardware security module 1110 can be configured to transmit a message to the second hardware security module 1120, indicating that the quantum key distribution network 1200 has been instructed to generate the new secret. In this manner it is possible for the first hardware security module 1110 to inform the second hardware security module 1120 that a new key has been generated and should be stored. This message can be transferred through the quantum encrypted channel 1230, and/or through a controller 3400, and/or through a connection between the first hardware security module 1110 and the second hardware security module 1120. In some embodiments, the second hardware security module 1120 can be configured to store the new secret upon receiving the message. In this manner it can be ensured that no fake secrets can be stored in the second hardware security module 1120.

In the embodiments implementing the transmission of the message, an additional, and thus optional, step S43 can be implemented in the method 4000, as visible in figure 4. While illustrated specifically between steps S41 and S43, it will be clear that this is only one possible implementation, step S43 can be implemented at any stage of method 4000 prior to step S42. In the embodiment described above, first hardware security module 1110 can be configured to implement step S43.

Alternatively, or in addition, the second hardware security module 1120 can be configured to store any new secret received from the second quantum key distribution node 1220. That is, the notification of a new secrets from the second quantum key distribution node 1220 to the second hardware security module 1120 can be sufficient for allowing the second hardware security module 1120 to store the new secret. In this manner, the storing of the new secret at the second hardware security module 1120 can be allowed without requiring transmission of a message.

Analogously, for the implementation of the method 5000, an optional step S54 can be implemented for indicating to the second hardware security module 1120 that transfer of a secret has been initiated, and that the secrets received by the second quantum key distribution node 1220 are to be stored. Also in this case, step S54 can be implemented at any stage of method 5000 prior to step S53. In case the transfer is initiated by first hardware security module 1110, then first hardware security module 1110 can be configured to implement step S54.

Also analogously, it will be clear to those skilled in the art that the method 5000 can be implemented without transferring a message and that, instead, the second hardware security module 1120 can be configured to store secrets upon receiving them from the second quantum key distribution node 1220.

In the embodiments described above, control over the generation and/or transfer of secrets is implemented at the first hardware security module 1110. This can be particularly advantageous in some cases. For instance, it allows the users of the first hardware security module 1110 to not have to deal with the generation and transfer of secrets, thus simplifying the operation from the user's perspective. Even further, users can be actively prevented from accessing those functionalities, by only allowing execution of those functions from inside of the first hardware security module 1110, increasing security. Moreover, by operating the second hardware security module 1120 in a slave mode, the second hardware security module 1120 also can be operated without user's interaction, or with little user's interaction for instance if the user is needed to enable bi-directional operation of the interfaces, while nevertheless maintaining a safe and reliable backup of the secrets.

Alternatively, or in addition, the control over the generation and/or transfer of secrets can be implemented at a controller 3400, illustrated for instance in figure 3. Controller 3400 can be connected to any of the remaining elements in figure 3, not necessarily to all of them, as will be clear from the description of the following embodiments. In particular, it will be clear to those skilled in the art that controller 3400 only needs to be connected to those elements to which the controller 3400 transmits information, and/or to those elements from which the controller 3400 receives information.

Thus, in an embodiment, the controller 3400 can be configured to instruct the quantum key distribution network 1200 to generate a new secret. Similarly, the controller 3400 can be configured to instruct the quantum key distribution network 1200 to transfer a secret between the hardware security systems 1110, 1120. Once the secret has been generated, or transferred, it is made available by a quantum key distribution node to the respective hardware security system, in a manner as previously described. The considerations previously made for enabling the storage of the secret, with or without steps S43 and S54, thus also applies in case it is the controller 3400, instead of the first hardware security module 1110, which initiates the generation and/or the transfer.

In some embodiments, the controller 3400 can be configured to instruct the quantum key distribution network 1200 to generate the new secret upon receiving a message indicating that the new secret is needed at the first hardware security module 1110. This message can be sent, for instance, by a user, or by the first hardware security module 1110 itself. By allowing the message to be processed by the controller, it is advantageously possible to centralize the operation of the system 3000 through the controller 3400. In this case, the controller 3400 can be configured to instruct the second hardware security module 1120 to store the new secret. This is advantageous as the second hardware security module 1120 can be informed by the controller 3400 that a new secret has been generated, or transferred, and should be stored, for instance with the message of step S43, S54. In this case, the first hardware security module 1110 and the second hardware security module 1120 can be implemented without any communication between them. Even further, each of the hardware security modules 1110, 1120 needs no knowledge that other hardware security module exists. The controller 3400 thus takes over the synchronizing functionality and all the hardware security modules 1110, 1120 need to know is that a new key is be stored, as instructed by the controller 3400. This is particularly advantageous in cases implementing more than two hardware security modules 1110, 1120, as it allows a centralization of the generation and/or transfer functionalities.

Thus, in some embodiments, the quantum key distribution network 1200 can be configured to transmit a message, to the second hardware security module 1120, indicating the availability of a new secret, and the second hardware security module 1120 can be configured to store the new secret upon receiving the message. This message can be implemented, for instance, through steps S43 and S54.

In some preferred embodiments, the message can be further configured to comprise information concerning the intended use of the new secret. This is particularly advantageous as it allows the second hardware security module 1120 to be informed of what the new secret is intended for. For instance, information on the rights applicable to the new secret, and/or on which users can make use of it, can be implemented. As described above, the quantum key distribution network 1200 can be configured to transmit the message, thus increasing security. For this purpose, the controller 3400 can also be provided with a non-illustrated quantum key distribution node, so as to access the functionalities of the quantum key distribution network.

In the description above, the quantum key distribution nodes 1210, 1220 and the hardware security modules 1110, 1120, have been described in terms of functional units. Their implementation can be obtained by software and/or hardware, most commonly a combination of the two.

In preferred embodiments, the first quantum key distribution node 1210 and the first hardware security module 1110 can be implemented in a single physical unity. Alternatively, or in addition, the second quantum key distribution node 1220 and the second hardware security module 1120 can be implemented in a single physical unity. Preferably, by single physical unit it is meant a single integrated circuit, or a single printed circuit board, or a computing device included in a single physical housing. This is particularly advantageous as the connection between the quantum key distribution node and the corresponding hardware security module can be better secured because access to it is limited by the two elements being implemented in a single physical unity.

Alternatively, or in addition, the first quantum key distribution node 1210 and the first hardware security module 1110 can be connected via a network, and/or the second quantum key distribution node 1220 and the second hardware security module 1120 can be connected via a network. Preferably, the networks are not accessible to any elements other than the ones indicated, possibly with the exception of the controller 3400. This enables a more flexible physical implementation of the hardware security system. The networks can be secured through encryption so that this increased flexibility does not come at a significant cost to security. Moreover, this configuration enables existing hardware security modules 1110, 1120, to be adapted for being used with the invention without need to modify their physical implementation.

While the invention has been described with respect to hardware security systems, it will be clear that one or more of the inventive concepts described above all based on the connection of a hardware security module and a corresponding quantum key distribution node. Thus, embodiments of the invention can be implemented by a single hardware security module 1110, 1120, configured to be connected to a quantum key distribution node 1210, 1220 so at to implement any of the functionalities of the first hardware security module 1110, or of the second hardware security module 1120 as described above. Further embodiments can be implemented by the hardware security module, similarly configured, together with the corresponding quantum key distribution node, preferably connected to it.

### List of reference numerals

1000: hardware security system
1110, 1120: hardware security module
1200: quantum key distribution network
1210, 1220: quantum key distribution node
1230: quantum encrypted channel
2000: hardware security system
2111, 2112: interface
2211: interface
3000: hardware security system
3400: controller
4000: method for operating a hardware security system
S40: generating a new secret
S41: transmitting new secret
S42: storing the new secret
S43: send message indicating new secret generation
5000: method for operating a hardware security system
S50: sending secret from hardware security system to quantum key distribution node
S51: sending secret from quantum key distribution node to quantum key distribution node
S52: sending secret from quantum key distribution node to hardware security system
S53: storing secret
S54: send message indicating secret transfer

## Claims

1. A hardware security system (1000, 2000, 3000) comprising
a first hardware security module (1110), configured to store a secret,
a second hardware security module (1120), configured to store the secret,
a quantum key distribution network (1200) comprising a first quantum key distribution node (1210), a second quantum key distribution node (1220) and a quantum encrypted channel (1230),
wherein the first quantum key distribution node (1210) is connected to the first hardware security module (1110),
wherein the second quantum key distribution node (1220) is connected to the second hardware security module (1120)
wherein the first hardware security module (1110) comprises a second interface (2112), configured to allow exchange of the secret with the first quantum key distribution node (1210),
the second interface (2112) is configured to allow the secret to be received by the first hardware security module (1110),
**characterized in that**
the second interface (2112) is further configured not to allow the secret to be outputted by the first hardware security module (1110),
the second interface (2112) is configured to allow the first hardware security module (1110) to transmit a request, to the first quantum key distribution node (1210), to generate the secret.

2. The hardware security system (2000) according to claim 1, wherein
the first hardware security module (1110) comprises a first interface (2111), configured to allow exchange of data other than the secret with a user of the first hardware security module (1110)
the first interface (2111) is configured to allow the data other than the secret to be received and outputted by the first hardware security module (1110).

3. The hardware security system (2000) according to any of claims 1 to 2, wherein
the first quantum key distribution node (1210) comprises a third interface (2211), configured to allow exchange of the secret with the first hardware security module (1110),
the third interface (2211) is configured to allow the secret to be outputted but not received by the first quantum key distribution node (1210).

4. The hardware security system (1000, 2000) according to any of claims 1 to 3, wherein
the first hardware security module (1110) is configured to instruct the quantum key distribution network (1200) to generate a new secret,
the first hardware security module (1110) is configured to transmit a message to the second hardware security module (1120), indicating that the quantum key distribution network (1200) has been instructed to generate the new secret,
the second hardware security module (1120) is configured to store the new secret upon receiving the message,
the quantum key distribution network (1200) is configured to transmit the message.

5. The hardware security system (3000) according to any of claims 1 to 4, further comprising
a controller (3400) configured to instruct the quantum key distribution network (1200) to generate a new secret.

6. The hardware security system (3000) according claim 5, wherein
the controller (3400) is configured to instruct the quantum key distribution network (1200) to generate the new secret upon receiving a message indicating that the new secret is needed at the first hardware security module (1110),
the controller (3400) is configured to instruct the second hardware security module (1120) to store the new secret.

7. The hardware security system (1000, 2000, 300) according to any of claims 1 to 6, wherein
the quantum key distribution network (1200) is configured to transmit a message, to the second hardware security module (1120), indicating the availability of a new secret,
the second hardware security module (1120) is configured to store the new secret upon receiving the message.

8. The hardware security system (1000, 2000, 300) according to claim 7, wherein
the message is further configured to comprise information concerning the intended use of the new secret,
the quantum key distribution network (1200) is configured to transmit the message.

9. The hardware security system (1000, 2000, 3000) according to any of claims 1 to 8, wherein
the first quantum key distribution node (1210) and the first hardware security module (1110) are implemented in a single physical unity, and/or
the second quantum key distribution node (1220) and the second hardware security module (1120) are implemented in a single physical unity.

10. The hardware security system (1000, 2000, 3000) according to any of claims 1 to 8, wherein
the first quantum key distribution node (1210) and the first hardware security module (1110) are connected via a network, and/or
the second quantum key distribution node (1220) and the second hardware security module (1120) are connected via a network.

11. A hardware security system (1000, 2000, 3000) according to any of claims 1 to 10, wherein
the quantum key distribution network (1200) is configured to receive one or more secrets from the first hardware security module (1110) and transmit them to the second hardware security module (1120).

12. A method (4000) for operating a hardware security system (1000, 2000, 3000) according to any of claims 1 to 11, the method comprising the steps of
generating (S41) one or more new secrets through the quantum key distribution network (1200),
sending (S42) the one or more new secrets from the first quantum key distribution node (1210) to the first hardware security module (1110) and from the second quantum key distribution node (1220) to the second hardware security module (1120),
storing (S43) the one or more new secrets at the first hardware security module (1110) and at the second hardware security module (1120).

13. A method (5000) for operating a hardware security system (1000, 2000, 3000) according to any of claims 1 to 11, the method comprising the steps of
sending (S50) one or more secrets from the first hardware security module (1110) to the first quantum key distribution node (1210),
sending (S51) the one or more secrets from the first quantum key distribution node (1210) to the second quantum key distribution node (1220),
sending (S52) the one or more secrets from the second quantum key distribution node (1220) to the second hardware security module (1120),
storing (S53) the one or more new secrets at the second hardware security module (1120).

14. A hardware security module (1110, 1120), configured to be connected to a quantum key distribution node (1210, 1220) so at to implement the functionality of the first hardware security module (1110), or of the second hardware security module (1120) of the hardware security system (1000, 2000, 3000) according to any of claims 1 to 11.

## Patentansprüche

1. Hardware-Sicherheitssystem (1000, 2000, 3000), umfassend
ein erstes Hardware-Sicherheitsmodul (1110), das zum Speichern eines Geheimnisses konfiguriert ist,
ein zweites Hardware-Sicherheitsmodul (1120), das zum Speichern des Geheimnisses konfiguriert ist,
ein Quantenschlüsselverteilungsnetzwerk (1200), das einen ersten Quantenschlüsselverteilungsknoten (1210), einen zweiten Quantenschlüsselverteilungsknoten (1220) und einen quantenverschlüsselten Kanal (1230) umfasst,
wobei der erste Quantenschlüsselverteilungsknoten (1210) mit dem ersten Hardware-Sicherheitsmodul (1110) verbunden ist,
wobei der zweite Quantenschlüsselverteilungsknoten (1220) mit dem zweiten Hardware-Sicherheitsmodul (1120) verbunden ist,
wobei das erste Hardware-Sicherheitsmodul (1110) eine zweite Schnittstelle (2112) umfasst, die so konfiguriert ist, dass sie den Austausch des Geheimnisses mit dem ersten Quantenschlüsselverteilungsknoten (1210) ermöglicht,
die zweite Schnittstelle (2112) konfiguriert ist, um zu ermöglichen, dass das Geheimnis von dem ersten Hardware-Sicherheitsmodul (1110) empfangen wird,
**dadurch gekennzeichnet, dass**
die zweite Schnittstelle (2112) ferner dazu konfiguriert ist, die Ausgabe des Geheimnisses durch das erste Hardware-Sicherheitsmodul (1110) nicht zuzulassen, die zweite Schnittstelle (2112) so konfiguriert ist, dass sie es dem ersten Hardware-Sicherheitsmodul (1110) ermöglicht, eine Anfrage an den ersten Quantenschlüsselverteilungsknoten (1210) zu übermitteln, um das Geheimnis zu generieren.

2. Hardware-Sicherheitssystem (2000) nach Anspruch 1, wobei
das erste Hardware-Sicherheitsmodul (1110) eine erste Schnittstelle (2111) umfasst, die konfiguriert ist, um den Austausch von anderen Daten als dem Geheimnis mit einem Benutzer des ersten Hardware-Sicherheitsmoduls (1110) zu ermöglichen,
die erste Schnittstelle (2111) konfiguriert ist, um zu ermöglichen, dass die anderen Daten als das Geheimnis von dem ersten Hardware-Sicherheitsmodul (1110) empfangen und ausgegeben werden.

3. Hardware-Sicherheitssystem (2000) nach einem der Ansprüche 1 bis 2, wobei der erste Quantenschlüsselverteilungsknoten (1210) eine dritte Schnittstelle (2211) umfasst, die so konfiguriert ist, dass sie den Austausch des Geheimnisses mit dem ersten Hardware-Sicherheitsmodul (1110) ermöglicht,
die dritte Schnittstelle (2211) konfiguriert ist, um zu ermöglichen, dass das Geheimnis von dem ersten Quantenschlüsselverteilungsknoten (1210) ausgegeben, jedoch nicht empfangen wird.

4. Hardware-Sicherheitssystem (1000, 2000) nach einem der Ansprüche 1 bis 3, wobei
das erste Hardware-Sicherheitsmodul (1110) so konfiguriert ist, dass es das Quantenschlüsselverteilungsnetzwerk (1200) anweist, ein neues Geheimnis zu generieren,
das erste Hardware-Sicherheitsmodul (1110) so konfiguriert ist, dass es eine Nachricht an das zweite Hardware-Sicherheitsmodul (1120) übermittelt, die anzeigt, dass das Quantenschlüsselverteilungsnetzwerk (1200) angewiesen wurde, das neue Geheimnis zu generieren,
das zweite Hardware-Sicherheitsmodul (1120) so konfiguriert ist, dass es das neue Geheimnis nach Empfang der Nachricht speichert,
das Quantenschlüsselverteilungsnetzwerk (1200) so konfiguriert ist, dass es die Nachricht übermittelt.

5. Hardware-Sicherheitssystem (3000) nach einem der Ansprüche 1 bis 4, ferner umfassend
eine Steuerung (3400), die so konfiguriert ist, dass sie das Quantenschlüsselverteilungsnetzwerk (1200) anweist, ein neues Geheimnis zu generieren.

6. Hardware-Sicherheitssystem (3000) nach Anspruch 5, wobei
die Steuerung (3400) so konfiguriert ist, dass sie das Quantenschlüsselverteilungsnetzwerk (1200) anweist, das neue Geheimnis zu generieren, nachdem sie eine Nachricht empfangen hat, die anzeigt, dass das neue Geheimnis im ersten Hardware-Sicherheitsmodul (1110) benötigt wird,
die Steuerung (3400) so konfiguriert ist, dass sie das zweite Hardware-Sicherheitsmodul (1120) anweist, das neue Geheimnis zu speichern.

7. Hardware-Sicherheitssystem (1000, 2000, 300) nach einem der Ansprüche 1 bis 6, wobei
das Quantenschlüsselverteilungsnetzwerk (1200) so konfiguriert ist, dass es eine Nachricht an das zweite Hardware-Sicherheitsmodul (1120) übermittelt, die die Verfügbarkeit eines neuen Geheimnisses anzeigt,
das zweite Hardware-Sicherheitsmodul (1120) so konfiguriert ist, dass es das neue Geheimnis nach Empfang der Nachricht speichert.

8. Hardware-Sicherheitssystem (1000, 2000, 300) nach Anspruch 7, wobei
die Nachricht ferner so konfiguriert ist, dass sie Informationen über die beabsichtigte Verwendung des neuen Geheimnisses umfasst,
das Quantenschlüsselverteilungsnetzwerk (1200) so konfiguriert ist, dass es die Nachricht übermittelt.

9. Hardware-Sicherheitssystem (1000, 2000, 3000) nach einem der Ansprüche 1 bis 8, wobei
der erste Quantenschlüsselverteilungsknoten (1210) und das erste Hardware-Sicherheitsmodul (1110) in einer einzigen physikalischen Einheit implementiert sind, und/oder
der zweite Quantenschlüsselverteilungsknoten (1220) und das zweite Hardware-Sicherheitsmodul (1120) in einer einzigen physikalischen Einheit implementiert sind.

10. Hardware-Sicherheitssystem (1000, 2000, 3000) nach einem der Ansprüche 1 bis 8, wobei
der erste Quantenschlüsselverteilungsknoten (1210) und das erste Hardware-Sicherheitsmodul (1110) über ein Netzwerk verbunden sind, und/oder
der zweite Quantenschlüsselverteilungsknoten (1220) und das zweite Hardware-Sicherheitsmodul (1120) über ein Netzwerk verbunden sind.

11. Hardware-Sicherheitssystem (1000, 2000, 3000) nach einem der Ansprüche 1 bis 10, wobei
das Quantenschlüsselverteilungsnetzwerk (1200) konfiguriert ist, um ein oder mehrere Geheimnisse von dem ersten Hardware-Sicherheitsmodul (1110) zu empfangen und sie an das zweite Hardware-Sicherheitsmodul (1120) zu übermitteln.

12. Verfahren (4000) zum Betreiben eines Hardware-Sicherheitssystems (1000, 2000, 3000) nach einem der Ansprüche 1 bis 11, wobei das Verfahren die folgenden Schritte umfasst:
Generieren (S41) eines oder mehrerer neuer Geheimnisse durch das Quantenschlüsselverteilungsnetzwerk (1200),
Senden (S42) des einen oder der mehreren neuen Geheimnisse von dem ersten Quantenschlüsselverteilungsknoten (1210) an das erste Hardware-Sicherheitsmodul (1110) und von dem zweiten Quantenschlüsselverteilungsknoten (1220) an das zweite Hardware-Sicherheitsmodul (1120),
Speichern (S43) des einen oder der mehreren neuen Geheimnisse im ersten Hardware-Sicherheitsmodul (1110) und im zweiten Hardware-Sicherheitsmodul (1120).

13. Verfahren (5000) zum Betreiben eines Hardware-Sicherheitssystems (1000, 2000, 3000) nach einem der Ansprüche 1 bis 11, wobei das Verfahren die folgenden Schritte umfasst:
Senden (S50) eines oder mehrerer Geheimnisse von dem ersten Hardware-Sicherheitsmodul (1110) an den ersten Quantenschlüsselverteilungsknoten (1210),
Senden (S51) des einen oder der mehreren Geheimnisse von dem ersten Quantenschlüsselverteilungsknoten (1210) an den zweiten Quantenschlüsselverteilungsknoten (1220),
Senden (S52) des einen oder der mehreren Geheimnisse von dem zweiten Quantenschlüsselverteilungsknoten (1220) an das zweite Hardware-Sicherheitsmodul (1120),
Speichern (S53) des einen oder der mehreren neuen Geheimnisse im zweiten Hardware-Sicherheitsmodul (1120).

14. Hardware-Sicherheitsmodul (1110, 1120), das dazu konfiguriert ist, mit einem Quantenschlüsselverteilungsknoten (1210, 1220) verbunden zu werden, um die Funktionalität des ersten Hardware-Sicherheitsmoduls (1110) oder des zweiten Hardware-Sicherheitsmoduls (1120) des Hardware-Sicherheitssystems (1000, 2000, 3000) nach einem der Ansprüche 1 bis 11 zu implementieren.

## Revendications

1. Système de sécurité matériel (1000, 2000, 3000) comprenant
un premier module de sécurité matériel (1110), configuré pour stocker un secret,
un deuxième module de sécurité matériel (1120), configuré pour stocker le secret, un réseau de distribution de clés quantiques (1200) comprenant un premier nœud de distribution de clés quantiques (1210), un deuxième nœud de distribution de clés quantiques (1220) et un canal crypté quantique (1230),
dans lequel le premier nœud de distribution de clés quantiques (1210) est relié au premier module de sécurité matériel (1110),
dans lequel le deuxième nœud de distribution de clés quantiques (1220) est relié au deuxième module de sécurité matériel (1120)
dans lequel le premier module de sécurité matériel (1110) comprend une deuxième interface (2112), configurée pour permettre l'échange du secret avec le premier nœud de distribution de clés quantiques (1210),
la deuxième interface (2112) est configurée pour permettre que le secret soit reçu par le premier module de sécurité matériel (1110),
**caractérisé en ce que**
la deuxième interface (2112) est en outre configurée pour empêcher que le secret ne soit délivré en sortie par le premier module de sécurité matériel (1110),
la deuxième interface (2112) est configurée pour permettre au premier module de sécurité matériel (1110) d'envoyer une requête, au premier nœud de distribution de clés quantiques (1210), pour générer le secret.

2. Système de sécurité matériel (2000) selon la revendication 1, dans lequel
le premier module de sécurité matériel (1110) comprend une première interface (2111), configurée pour permettre l'échange de données autres que le secret avec un utilisateur du premier module de sécurité matériel (1110)
la première interface (2111) est configurée pour permettre aux données autres que le secret d'être reçues et délivrées en sortie par le premier module de sécurité matériel (1110).

3. Système de sécurité matériel (2000) selon l'une quelconque des revendications 1 à 2, dans lequel
le premier nœud de distribution de clés quantiques (1210) comprend une troisième interface (2211), configurée pour permettre l'échange du secret avec le premier module de sécurité matériel (1110),
la troisième interface (2211) est configurée pour permettre au secret d'être délivré en sortie mais pas d'être reçu par le premier nœud de distribution de clés quantiques (1210).

4. Système de sécurité matériel (1000, 2000) selon l'une quelconque des revendications 1 à 3, dans lequel
le premier module de sécurité matériel (1110) est configuré pour donner instruction au réseau de distribution de clés quantiques (1200) de générer un nouveau secret,
le premier module de sécurité matériel (1110) est configuré pour transmettre un message au deuxième module de sécurité matériel (1120), indiquant que le réseau de distribution de clés quantiques (1200) a reçu l'instruction de générer le nouveau secret,
le deuxième module de sécurité matériel (1120) est configuré pour stocker le nouveau secret lors de la réception du message,
le réseau de distribution de clés quantiques (1200) est configuré pour transmettre le message.

5. Système de sécurité matériel (3000) selon l'une quelconque des revendications 1 à 4, comprenant en outre
un contrôleur (3400) configuré pour donner instruction au réseau de distribution de clés quantiques (1200) de générer un nouveau secret.

6. Système de sécurité matériel (3000) selon la revendication 5, dans lequel
le contrôleur (3400) est configuré pour donner instruction au réseau de distribution de clés quantiques (1200) de générer le nouveau secret lors de la réception d'un message indiquant que le nouveau secret est requis au niveau du premier module de sécurité matériel (1110),
le contrôleur (3400) est configuré pour donner instruction au deuxième module de sécurité matériel (1120) de stocker le nouveau secret.

7. Système de sécurité matériel (1000, 2000, 300) selon l'une quelconque des revendications 1 à 6, dans lequel
le réseau de distribution de clés quantiques (1200) est configuré pour transmettre au deuxième module de sécurité matériel (1120) un message indiquant la disponibilité d'un nouveau secret,
le deuxième module de sécurité matériel (1120) est configuré pour stocker le nouveau secret lors de la réception du message.

8. Système de sécurité matériel (1000, 2000, 300) selon la revendication 7, dans lequel
le message est en outre configuré pour comporter des informations concernant l'utilisation prévue du nouveau secret,
le réseau de distribution de clés quantiques (1200) est configuré pour transmettre le message.

9. Système de sécurité matériel (1000, 2000, 3000) selon l'une quelconque des revendications 1 à 8, dans lequel
le premier nœud de distribution de clés quantiques (1210) et le premier module de sécurité matériel (1110) sont intégrés dans une unique unité physique, et/ou
le deuxième nœud de distribution de clés quantiques (1220) et le deuxième module de sécurité matériel (1120) sont intégrés dans une unique unité physique.

10. Système de sécurité matériel (1000, 2000, 3000) selon l'une quelconque des revendications 1 à 8, dans lequel
le premier nœud de distribution de clés quantiques (1210) et le premier module de sécurité matériel (1110) sont reliés via un réseau, et/ou
le deuxième nœud de distribution de clés quantiques (1220) et le deuxième module de sécurité matériel (1120) sont reliés via un réseau.

11. Système de sécurité matériel (1000, 2000, 3000) selon l'une quelconque des revendications 1 à 10, dans lequel
le réseau de distribution de clés quantiques (1200) est configuré pour recevoir un ou plusieurs secrets provenant du premier module de sécurité matériel (1110) et les transmettre au deuxième module de sécurité matériel (1120).

12. Procédé (4000) pour le fonctionnement d'un système de sécurité matériel (1000, 2000, 3000) selon l'une quelconque des revendications 1 à 11, le procédé comprenant les étapes suivantes
la génération (S41) d'un ou plusieurs nouveaux secrets par le biais du réseau de distribution de clés quantiques (1200),
l'envoi (S42) des un ou plusieurs nouveaux secrets depuis le premier nœud de distribution de clés quantiques (1210) vers le premier module de sécurité matériel (1110) et depuis le deuxième nœud de distribution de clés quantiques (1220) vers le deuxième module de sécurité matériel (1120),
le stockage (S43) des un ou plusieurs nouveaux secrets dans le premier module de sécurité matériel (1110) et dans le deuxième module de sécurité matériel (1120).

13. Procédé (5000) pour le fonctionnement d'un système de sécurité matériel (1000, 2000, 3000) selon l'une quelconque des revendications 1 à 11, le procédé comprenant les étapes suivantes
l'envoi (S50) d'un ou plusieurs secrets depuis le premier module de sécurité matériel (1110) vers le premier nœud de distribution de clés quantiques (1210),
l'envoi (S51) des un ou plusieurs secrets depuis le premier nœud de distribution de clés quantiques (1210) vers le deuxième nœud de distribution de clés quantiques (1220),
l'envoi (S52) des un ou plusieurs secrets depuis le deuxième nœud de distribution de clés quantiques (1220) vers le deuxième module de sécurité matériel (1120),
le stockage (S53) des un ou plusieurs nouveaux secrets au niveau du deuxième module de sécurité matériel (1120).

14. Module de sécurité matériel (1110, 1120), configuré pour être relié à un nœud de distribution de clés quantiques (1210, 1220) de manière à mettre en œuvre la fonctionnalité du premier module de sécurité matériel (1110) ou du deuxième module de sécurité matériel (1120) du système de sécurité matériel (1000, 2000, 3000) selon l'une quelconque des revendications 1 à 11.
